# EUROPEAN PATENT SPECIFICATION

(11) **EP 0 705 801 B1**
(45) Date of publication and mention of the grant of the patent: **02.12.1998**
(21) Application number: 95115178.6
(22) Date of filing: 27.09.1995
(51) Int. Cl.: C03C 17/34, C03C 17/36, G02F 1/133

(54) **Alkali metal diffusion barrier layer**
Alkalimetall-Diffusionsbarriere-Schicht
Couche barrière contre la diffusion de métaux alcalins

(30) Priority: 04.10.1994 US 330148
(43) Date of publication of application: 10.04.1996
(73) Proprietor: PPG INDUSTRIES, INC., Pittsburgh Pennsylvania 15272 (US)
(72) Inventor: Finley, James J., Pittsburgh, Pennsylvania 15238 (US); Gillery, Howard F., Allison Park, Pennsylvania 15101 (US)
(74) Representative: Sternagel, Hans-Günther, Dr.

(56) References cited:
- EP-A- 0 174 727
- CH-A- 476 180
- DATABASE WPI Section Ch, Week 7808 Derwent Publications Ltd., London, GB; Class L01, AN 78-14883A & JP-A-53 002 517 ( FUJITSU LTD) , 11 January 1978
- SZKLO I CERAMIKA, vol. 43, no. 6, 1992 POLAND, pages 2-7, ZELAZOWSKA 'Study of metal oxide and titanium oxinitride coatings on soda-lime glass'

## Description

### FIELD OF THE INVENTION

The present invention relates generally to the art of coatings on glass substrates and more particularly to the art of preventing diffusion of alkali metal, such as sodium, from the glass into such coatings.

### BACKGROUND FOR THE INVENTION

U.S. Patent No. 5,165,972 to Porter relates to barrier coatings to prevent migration of alkali metal ions from a glass surface, deposited by pyrolysis of a silane gas on the glass surface above 600°C in the presence of a gaseous electron donating compound, whereby oxygen from the glass is incorporated with silicon to form a transparent barrier coating up to 50 nanometers thick on the glass surface to prevent migration of alkali metal ions into overlying layers sensitive to alkali metal ions, e.g. in glass coated with electroconductive or infrared reflecting coatings, and in liquid crystal displays.

European Patent Specification 0 071 865 (Publication number) to Mizuhashi et al. claims a glass body comprising an alkali-containing glass substrate and a silicon oxide layer formed on its surface for preventing diffusion of alkali metal ions from the glass substrate, characterized in that said silicon oxide layer contains from 0.01 to 25 molar percent hydrogen bonded to silicon.

Szklo i Ceramika, Vol 43, no. 6, 1992. pages 2-7, refers to surface studies on glass substrates precoated for example with tin oxide, titanium oxide, zirconium oxide and aluminium oxide as barrier layers having a thickness between 15 and 20 nm and on electroconductive indium/tin oxide layer, whereby especially the influence of the cleaning procedure on the composition of the glass surface is disclosed.

An effective alkali metal barrier layer must be stable, and must remain impermeable to alkali diffusion even at elevated temperatures, as high as 1100°F (593°C). Optically, the barrier layer must have high transmittance in the visible wavelength range so as not to affect the optical properties of the overlying coating. In applications wherein the overlying coating is electroconductive, the barrier layer is preferably not electroconductive. If the overlying coating is subject to partial etching, e.g. to produce a circuit, the barrier layer must not be soluble in the etchant, often hydrochloric acid. If the refractive index of the barrier layer matches the refractive index of the substrate as closely as possible, as with the use of a silica barrier layer for a soda-lime-silica glass substrate, a thicker barrier layer can be applied for greater effectiveness without a great loss of visible light transmission or other undesirable optical effects.

### SUMMARY OF THE INVENTION

The present invention refers to a coated glass article comprising:
a. a transparent glass substrate which comprises alkali metal ions,
b. on a surface Of said substrate a barrier layer at a thickness of 120 Å or less of zirconium oxide or titanium oxide, and
c. an electroconductive metal oxide coating on said barrier layer,

a method of producing a coated glass article comprising the steps of:
   a. selecting a glass substrate which comprises alkali metal ions,
   b. depositing on a surface thereof a barrier layer at a thickness of 120 Å or less of zirconium oxide or titanium oxide, and
   c. depositing on said barrier layer an electroconductive metal oxide coating and to
a liquid crystal display comprising:
   a. a transparent alkali metal-containing glass substrate,
   b. on a surface of said substrate a transparent barrier layer of zirconium oxide or titanium oxide at a layer thickness of 120 Å or less,
   c. on said barrier layer an electroconductive metal oxide coating, and
   d. a liquid crystal material in electrical contact with said electroconductive metal oxide coating.

The present invention recognizes the desirability of utilizing a material other than silica as a diffusion barrier for alkali metal such as sodium. Although the prior art suggests that the refractive index of such a diffusion barrier should match the refractive index of the substrate as closely as possible, thus selecting silica for glass substrates, in accordance with the present invention, very thin layers of zirconium oxide and titanium oxide are produced as effective diffusion barriers for sodium without compromising optical properties of the coated glass.

The zirconium oxide and titanium oxide barrier layers of the present invention are readily deposited by magnetron sputtering, although they may be deposited by other techniques as well, such as pyrolysis or sol-gel techniques. While the diffusion barrier layers of the present invention have refractive indices significantly higher than the refractive index of typical glass substrates, because they are very thin there is no deleterious effect on the optical properties of the overlying coating. There is, in addition, no deleterious effect on other properties, such as electroconductivity, of the overlying coating.

The barrier layers of the present invention have been found to be effective at surprisingly thin thicknesses. Whereas the prior art teaches silica barrier layers up to 50 nanometers (500 Angstroms) thick, the metal oxide barrier layers of the present invention are fully effective at thicknesses well under 120 Angstroms, particularly in the range of 20 to 90 Angstroms, and may be optimally effective at thicknesses in the range of 30 to 60 Angstroms. At such thicknesses, the visible light transmittance of a glass substrate coated with the barrier layer of the present invention is essentially the same as the visible light transmittance of an uncoated glass substrate, generally varying by only about one percent.

### BRIEF DESCRIPTION OF THE DRAWING

Figure 1 illustrates the effectiveness at minimizing alkali metal migration of a titanium oxide barrier layer at thicknesses of 45, 90, 135 and 180 Angstroms (Examples 1 to 4), compared with uncoated glass.

Figure 2 illustrates the effectiveness of a zirconium oxide barrier layer at thicknesses of 30, 60, 90 and 120 Angstroms (Examples 5 to 8), compared with uncoated glass.

Figure 3 illustrates the comparative performance as a barrier layer at thicknesses of 30, 60, 90 and 120 Angstroms of zinc/tin oxide (Comparative Examples 9 to 12), compared with uncoated glass.

Figure 4 compares the effectiveness as barrier layers of titanium oxide, zirconium oxide and zinc/tin oxide at thicknesses of 45, 30 and 30 Angstroms respectively (Examples 1, 5 and 9).

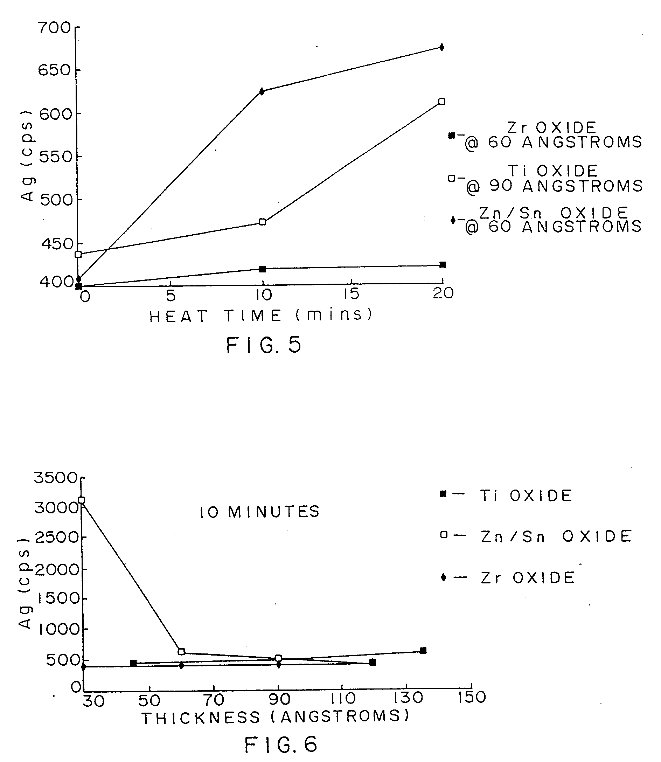

Figure 5 compares the effectiveness as barrier layers of titanium oxide, zirconium oxide and zinc/tin oxide at thicknesses of 90, 60 and 60 Angstroms respectively (Examples 2, 6 and 10).

Figure 6 shows the effectiveness of barrier layers of titanium oxide, zirconium oxide and zinc/tin oxide as a function of barrier layer thickness.

### DESCRIPTION OF PREFERRED EMBODIMENTS

Glass substrates of conventional soda-lime-silica composition formed by a float process were used in the methods and articles described herein. The glass samples were coated with a metal oxide barrier layer. The barrier layers of the present invention are metal oxides which are optically transparent, chemically inert and electrically insulating, in addition to being impermeable to alkali metal diffusion even at elevated temperatures. The metal oxides useful in the present invention are zirconium oxide and titanium oxide, which are relatively insoluble in acid. The metal oxide barrier layers of the present invention are preferably deposited by magnetron sputtering of a metal target in an oxidizing atmosphere.

The thickness of the barrier layer must be sufficient to minimize alkali metal migration at as high a temperature as the coated glass is expected to experience during fabrication and use. For example, if the coating over the barrier layer is an electroconductive coating for use in a liquid crystal display, the LCD cell may be subjected to a temperature as high as 1100°F (593°C) during frit sealing. The zirconium oxide and titanium oxide barrier layers of the present invention are found to be effective at thicknesses as low as 20 to 120 Angstroms, and optimally effective at thicknesses in the range of 30 to 60 Angstroms. This optimum thickness range is unexpected since the effectiveness of a barrier layer would be expected to increase with thickness, as is the case for zinc/tin oxide, for example.

When the barrier layer is zirconium oxide, the thickness is preferably in the range of 20 to 120 Angstroms, more preferably 20 to 90 Angstroms, particularly 30 to 60 Angstroms, and most particularly 50 to 60 Angstroms. When the barrier layer is titanium oxide, the thickness is preferably in the range of 20 to 90 Angstroms, preferably 30 to 90 Angstroms, particularly 45 to 90 Angstroms and most particularly 50 to 60 Angstroms.

In order to evaluate alkali metal diffusion, barrier layers were subjected to silver ion exchange, wherein silver was ion-exchanged with any sodium that diffused through the barrier layer. The resulting silver ion concentration was measured by X-ray fluorescence. The net intensity of the silver emission line was compared to the net intensity of the silver emission line of silver ion-exchanged glass without a barrier layer of the present invention, or with metal oxide layers found to be ineffective barriers for alkali metal diffusion by comparison with the barrier layers of the present invention at low thicknesses.

To measure the effectiveness of a barrier layer at preventing alkali metal diffusion, barrier layer coated glass samples were heated at 575°C for 10 and 20 minutes to promote alkali metal migration from the glass. After the samples were cooled to ambient temperature, they were heated for 15 minutes at 150°C. The coated surfaces were then treated with a molten mixture comprising 38 mole percent silver nitrate and 62 mole percent potassium nitrate for 1 hour at 150°C to allow ion-exchange of silver for any sodium present. The samples were cooled to ambient temperature, and the hardened nitrate mixture was rinsed off. The samples were dipped into nitric acid to remove any residual silver nitrate and rinsed again. The coated surfaces were then analyzed by x-ray fluorescence to measure the amount of silver present, which is proportional to the amount of sodium which diffused into the coating from the glass. For comparison, unheated coated samples were ion-exchanged and the silver measured for a background count, as were unheated and heated uncoated glass samples.

In a particularly preferred embodiment of the present invention, the barrier layer is overcoated with a coating of electroconductive metal oxide for use in a liquid crystal display. Preferred electroconductive metal oxide coatings include indium oxide, tin oxide, indium/tin oxide and zinc/aluminum oxide. A particularly preferred electroconductive coating is indium/tin oxide, commonly referred to as ITO. The indium/tin oxide coating preferably has an electrical resistance of about 300 ohms per square for use in a liquid crystal display. The indium/tin oxide coating is preferably deposited over the barrier layer by magnetron sputtering. Electroconductive metal oxide films may be deposited by sputtering a metal cathode target in an oxidizing atmosphere, or by sputtering of ceramic metal oxide targets.

The present invention will be further understood from the descriptions of specific examples which follow.

### EXAMPLES 1 TO 4

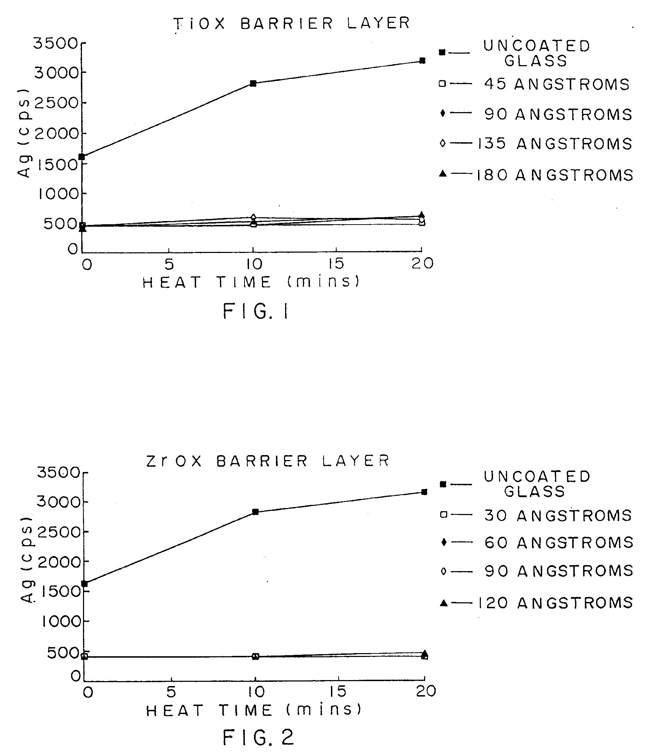

Soda-lime-silica float glass samples having a glass substrate thickness of 2.3 millimeters and a visible light transmittance (measured at 550 nanometers) of 91.3 percent were coated with titanium oxide barrier layers as follows. A planar titanium target was magnetron sputtered at 8.5 kilowatts, 520 volts in an atmosphere of 50 percent argon and 50 percent oxygen. The glass substrates were conveyed past a stationary cathode at a rate of 53 inches (1.35 meters) per minute. Titanium oxide barrier layers having thicknesses of 45, 90, 135 and 180 Angstroms were deposited by passing the glass substrates under the target 1, 2, 3 and 4 times respectively (examples 1 to 4 respectively). The visible light transmittances (measured at 550 nanometers) of the titanium oxide coated glass substrates were 90.8 percent at 45 Angstroms, 89.4 percent at 90 Angstroms, 87.3 percent at 135 Angstroms and 84.8 percent at 180 Angstroms (Examples 1 to 4 respectively). The titanium oxide coated glass substrates were heated at 575°C for either 10 or 20 minutes, then ion-exchanged with silver to replace any diffused sodium with silver. The silver was then measured by x-ray fluorescence. A comparison of the effectiveness of the titanium oxide barrier layer at thicknesses up to 180 Angstroms is shown in Figure 1.

### EXAMPLES 5 TO 8

Soda-lime-silica float glass samples having a thickness of 2.3 millimeters and a visible light transmittance of 91.3 percent were coated with zirconium oxide barrier layers as follows. A planar zirconium target was magnetron sputtered at 6.5 kilowatts, 374 volts in an atmosphere of 50 percent oxygen and 50 percent argon. Since zirconium sputters faster than titanium, the glass substrates were conveyed past the stationary cathode at a rate of 190 inches (4.8 meters) per minute to deposit zirconium oxide barrier layers having thicknesses of 30, 60, 90 and 120 Angstroms respectively from 1, 2, 3 or 4 passes (examples 5 to 8 respectively). The visible light transmittance of the glass substrate with the thickest zirconium oxide barrier layer (example 8 at 120 Angstroms) was 90.2 percent. The zirconium oxide coated glass substrates were heated and silver ion exchanged as in the previous examples. Figure 2 shows the effectiveness of the zirconium oxide barrier layers at thicknesses from 30 to 120 Angstroms.

### COMPARATIVE EXAMPLES 9 TO 12

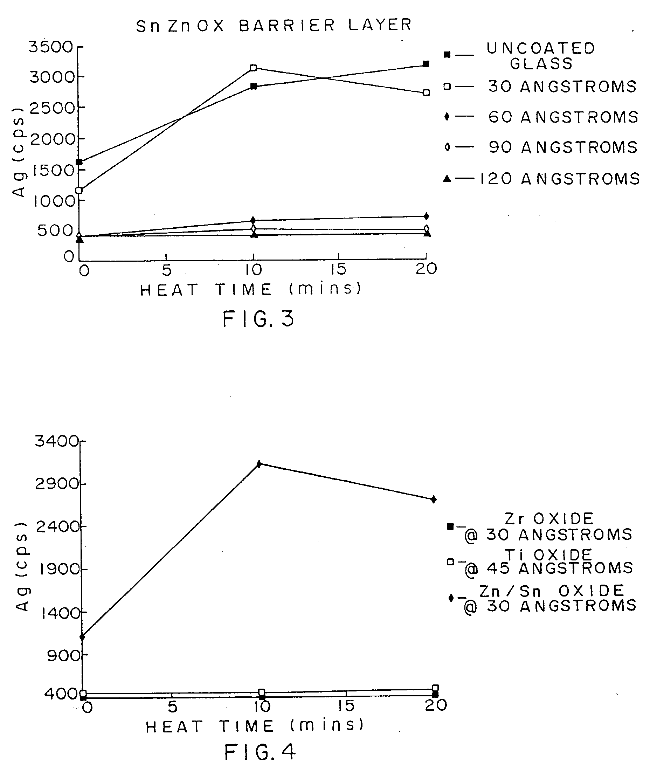

For comparison, soda-lime-silica float glass samples having a thickness of 2.3 milliliters were coated with zinc/tin oxide. A planar target comprising 52.4 weight percent zinc and 47.6 weight percent tin was magnetron sputtered at 0.78 kilowatts, 386 volts in an atmosphere of 50 percent argon and 50 percent oxygen. The glass substrates were conveyed at a rate of 190 inches (4.8 meters) per minute to deposit zinc/tin oxide coatings of 30, 60, 90 and 120 Angstroms thickness from 1, 2, 3 and 4 passes respectively (examples 9 to 12 respectively). The transmittance of the glass substrate with the thickest zinc/tin oxide coating (example 12 at 120 Angstroms) was 90.7 percent. The zinc/tin oxide coated glass substrates were heated, silver ion-exchanged and measured by x-ray fluorescence as in the previous examples. Figure 3 shows that a thin zinc/tin oxide layer is not an effective sodium diffusion barrier, and that the effectiveness of zinc/tin oxide as a sodium diffusion barrier is a function of increasing thickness.

### EXAMPLE 13

A zirconium oxide barrier layer was deposited on a sheet of glass 0.048 inch (1.2 millimeters) thick by sputtering a zirconium cathode in an argon/oxygen atmosphere at a deposition rate of 7.8 Angstroms per second of zirconium oxide. In three passes at a substrate conveyance rate of 2 inches per second (3.05 meters per minute), a zirconium oxide barrier layer 55 ± 5 Angstroms thick was deposited, decreasing the transmittance of the glass substrate by about 0.5 to 1 percent. Onto the zirconium oxide barrier layer was deposited a layer of indium/tin oxide at the same glass speed. Three passes of a cathode target comprising 90 weight percent indium and 10 weight percent tin produced an indium/tin oxide coated glass substrate with a surface resistance of about 300 ohms per square and a transmittance of about 83.6 percent.

The above examples are offered to illustrate the barrier layers of the present invention. Methods of deposition other than magnetron sputtering are within the scope of the invention. The overlying coating may be a single layer or multiple layers of metal oxides. The time and temperature heating cycles described herein only illustrate a useful test procedure for determining relative barrier layer effectiveness. The scope of the present invention is defined by the following claims.

## Claims

1. A coated glass article comprising:
a. a transparent glass substrate which comprises alkali metal ions,
b. on a surface of said substrate a barrier layer at a thickness of 120 Å or less of zirconium oxide or titanium oxide, and
c. an electroconductive metal oxide coating on said barrier layer.

2. A coated glass article according to claim 1, wherein said electroconductive coating is selected from the group consisting of indium oxide, tin oxide, indium/tin oxide and zinc/aluminum oxide.

3. A coated glass article according to claim 2, wherein said electroconductive coating comprises indium/tin oxide.

4. A coated glass article according to claim 1, wherein said barrier layer is zirconium oxide.

5. A coated article according to claim 4, wherein said zirconium oxide barrier layer has a thickness in the range of 20 to 120 Å.

6. A coated article according to claim 5, wherein the zirconium oxide barrier layer has a thickness in the range of 30 to 60 Å.

7. A coated article according to claim 1, wherein said barrier layer is titanium oxide.

8. A coated article according to claim 7, wherein the thickness of the titanium oxide is from 30 to 90 Å.

9. A method of producing a coated glass article comprising the steps of:
a. selecting a glass substrate which comprises alkali metal ions,
b. depositing on a surface thereof a barrier layer at a thickness of 120 Å or less of zirconium oxide or titanium oxide, and
c. depositing on said barrier layer an electroconductive metal oxide coating.

10. A method according to claim 9, wherein the step of depositing a barrier layer comprises sputtering in an oxidizing atmosphere a metal cathode target selected from the group consisting of zirconium and titanium.

11. A method according to claim 10, wherein the step of depositing a metal-containing electroconductive coating comprises sputtering a cathode target comprising a metal selected from the group consisting of indium, tin, alloys of indium and tin, und alloys of zinc and aluminum.

12. A method according to claim 11, wherein said cathode target comprising a metal comprises ceramic metal oxide.

13. A liquid crystal display comprising:
a. a transparent alkali metal-containing glass substrate,
b. on a surface of said substrate a transparent barrier layer of zirconium oxide or titanium oxide at a layer thickness of 120 Å or less,
c. on said barrier layer an electroconductive metal oxide coating, and
d. a liquid crystal material in electrical contact with said electroconductive metal oxide coating.

14. A liquid crystal display according to claim 13, wherein said electroconductive metal oxide coating is selected from the group consisting of indium oxide, tin oxide, indium/tin oxide and zinc/aluminum oxide.

15. A liquid crystal display according to claim 14, wherein said barrier layer is zirconium oxide and said electroconductive coating is indium/tin oxide.

16. A liquid crystal display according to claim 15, wherein the thickness of said zirconium oxide barrier layer is in the range of 20 to 90 Å.

17. A liquid crystal display according to claim 13, wherein said barrier layer is titanium oxide.

## Patentansprüche

1. Beschichteter Glasgegenstand, enthaltend:
a. ein transparentes Glassubstrat, das Alkalimetallionen enthält,
b. auf einer Oberfläche dieses Substrats eine Sperrschicht in einer Dicke von 120 Å oder weniger aus Zirkonoxid oder Titanoxid und
c. eine elektrisch leitende Metalloxidbeschichtung auf dieser Sperrschicht.

2. Beschichteter Glasgegenstand nach Anspruch 1, wobei diese elektrisch leitende Beschichtung ausgewählt ist aus der Gruppe, bestehend aus Indiumoxid, Zinnoxid, Indium-/Zinnoxid und Zink-/Aluminiumoxid.

3. Beschichteter Glasgegenstand nach Anspruch 2, wobei diese elektrisch leitende Beschichtung Indium-/Zinnoxid enthält.

4. Beschichteter Glasgegenstand nach Anspruch 1, wobei diese Sperrschicht Zirkonoxid ist.

5. Beschichteter Gegenstand nach Anspruch 4, wobei diese Sperrschicht aus Zirkonoxid eine Dicke im Bereich von 20 bis 120 Å aufweist.

6. Beschichteter Gegenstand nach Anspruch 5, wobei die Sperrschicht aus Zirkonoxid eine Dicke im Bereich von 30 bis 60 Å aufweist.

7. Beschichteter Gegenstand nach Anspruch 1, wobei diese Sperrschicht Titanoxid ist.

8. Beschichteter Gegenstand nach Anspruch 7, wobei die Dicke des Titanoxids 30 bis 90 Å beträgt.

9. Verfahren zur Herstellung eines beschichteten Glasgegenstandes, die Schritte umfassend:
a. Auswählen eines Glassubstrates, das Alkalimetallionen enthält,
b. Abscheiden einer Sperrschicht in einer Dicke von 120 Å oder weniger aus Zirkonoxid oder Titanoxid auf einer Oberfläche davon und
c. Abscheiden einer elektrisch leitenden Metalloxidbeschichtung auf dieser Sperrschicht.

10. Verfahren nach Anspruch 9, wobei der Schritt des Abscheidens einer Sperrschicht das Sputtern eines Metallkathodentargets, ausgewählt aus der Gruppe bestehend aus Zirkon und Titan, in einer oxydierenden Atmosphäre umfaßt.

11. Verfahren nach Anspruch 10, worin der Schritt des Abscheidens einer metallhaltigen, elektrisch leitenden Beschichtung das Sputtern eines Kathodentargets umfaßt, das ein Metall, ausgewählt aus der Gruppe bestehend aus Indium, Zinn, Legierungen von Indium und Zinn und Legierungen von Zink und Aluminium, enthält.

12. Verfahren nach Anspruch 11, wobei dieses ein Metall enthaltende Kathodentarget ein keramisches Metalloxid enthält.

13. Flüssigkristallanzeige, enthaltend:
a. ein transparentes alkalimetallhaltiges Glassubstrat,
b. auf einer Oberfläche dieses Substrats eine transparente Sperrschicht aus Zirkonoxid oder Titanoxid in einer Schichtdicke von 120 Å oder weniger,
c. auf dieser Sperrschicht eine elektrisch leitende Metalloxidbeschichtung und
d. ein Flüssigkristallmaterial in elektrischem Kontakt mit dieser elektrisch leitenden Metalloxidbeschichtung.

14. Flüssigkristallanzeige nach Anspruch 13, wobei diese elektrisch leitende Metalloxidbeschichtung ausgewählt ist aus der Gruppe bestehend aus Indiumoxid, Zinnoxid, Indium-/Zinnoxid und Zink-/Aluminiumoxid.

15. Flüssigkristallanzeige nach Anspruch 14, wobei diese Sperrschicht Zirkonoxid und diese elektrisch leitende Beschichtung Indium-/Zinnoxid ist.

16. Flüssigkristallanzeige nach Anspruch 15, wobei die Dicke dieser Sperrschicht aus Zirkonoxid im Bereich von 20 bis 90 Å liegt.

17. Flüssigkristallanzeige nach Anspruch 13, wobei diese Sperrschicht Titanoxid ist.

## Revendications

1. Article en verre revêtu, qui comprend :
a. un support en verre transparent qui comprend des ions de métaux alcalins,
b. sur une surface dudit support, une couche formant écran ou barrière, d'une épaisseur de 120 Å ou moins d'oxyde de zirconium ou d'oxyde de titane, et
c. un revêtement d'oxyde de métal électroconducteur sur ladite couche formant écran ou barrière.

2. Article en verre revêtu suivant la revendication 1, caractérisé en ce que ledit revêtement électroconducteur est choisi dans le groupe formé par l'oxyde d'indium, l'oxyde d'étain, l'oxyde d'indium/étain et l'oxyde de zinc/aluminium.

3. Article en verre revêtu suivant la revendication 2, caractérisé en ce que ledit revêtement électroconducteur est constitué d'oxyde d'indium/étain.

4. Article en verre revêtu suivant la revendication 1, caractérisé en ce que ladite couche formant écran ou barrière est en oxyde de zirconium.

5. Article revêtu suivant la revendication 4, caractérisé en ce que ladite couche formant écran ou barrière en oxyde de zirconium possède une épaisseur qui varie de 20 à 120 Å.

6. Article revêtu suivant la revendication 5, caractérisé en ce que la couche formant écran ou barrière en oxyde de zirconium a une épaisseur qui varie de 30 à 60 Å.

7. Article revêtu suivant la revendication 1, caractérisé en ce que ladite couche formant écran ou barrière est en oxyde de titane.

8. Article revêtu suivant la revendication 7, caractérisé en ce que l'épaisseur de l'oxyde de titane varie de 30 à 90 Å.

9. Procédé de production d'un article en verre revêtu, caractérisé en ce qu'il comprend les étapes consistant à :
a. choisir un support en verre qui comprend des ions de métaux alcalins,
b. déposer sur une surface de ce support une couche formant écran ou barrière d'une épaisseur de 120 Å ou moins d'oxyde de zirconium ou d'oxyde de titane, et
c. déposer sur ladite couche formant écran ou barrière un revêtement d'oxyde de métal électroconducteur.

10. Procédé suivant la revendication 9, caractérisé en ce que l'étape de déposition d'une couche formant écran ou barrière comprend la projection dans une atmosphère oxydante d'une cible formant cathode métallique choisie dans le groupe formé par le zirconium et le titane.

11. Procédé suivant la revendication 10, caractérisé en ce que l'étape de déposition d'un revêtement électroconducteur contenant un métal comprend la projection d'une cible formant cathode comprenant un métal choisi dans le groupe formé par l'indium, l'étain, les alliages de l'indium et de l'étain et les alliages du zinc et de l'aluminium.

12. Procédé suivant la revendication 11, caractérisé en ce que ladite cible formant cathode comprenant un métal est constituée par un oxyde de métal céramique.

13. Affichage à cristaux liquides, comprenant :
a. un support en verre contenant un métal alcalin transparent,
b. sur une surface dudit support, une couche formant écran ou barrière transparente d'oxyde de zirconium ou d'oxyde de titane en une épaisseur de couche de 120 Å ou moins,
c. sur ladite couche formant écran ou barrière un revêtement d'oxyde de métal électroconducteur, et
d. un matériau à cristaux liquides en contact électrique avec ledit revêtement d'oxyde de métal électroconducteur.

14. Affichage à cristaux liquide suivant la revendication 13, caractérisé en ce que ledit revêtement d'oxyde de métal électroconducteur est choisi dans le groupe formé par l'oxyde d'indium, l'oxyde d'étain, l'oxyde d'indium/étain et l'oxyde de zinc/aluminium.

15. Affichage à cristaux liquides suivant la revendication 14, caractérisé en ce que ladite couche formant écran ou barrière est en oxyde de zirconium et ledit revêtement électroconducteur est un oxyde d'indium/étain.

16. Affichage à cristaux liquides suivant la revendication 15, caractérisé en ce que l'épaisseur de ladite couche formant écran ou barrière d'oxyde de zirconium varie de 20 à 90 Å.

17. Affichage à cristaux liquides suivant la revendication 13, caractérisé en ce que ladite couche formant écran ou barrière est en oxyde de titane.
